# EUROPEAN PATENT APPLICATION

(11) **EP 0 528 660 A2**
(43) Date of publication of application: **24.02.1993**
(21) Application number: 92307452.0
(22) Date of filing: 14.08.1992
(51) Int. Cl.: A01K 1/015

(54) **Livestock bedding**

(30) Priority: 17.08.1991 GB 9117795
(71) Applicant: DUNLOP LIMITED, London SW1P 2PL (GB)
(72) Inventor: Davies, Russell, Salford M5 3JR (GB)
(74) Representative: Badger, John Raymond

(57) **Abstract**

For the stabling of livestock use is made of bedding (11) comprising elongate elements (10) of substantially resilient foam material of a closed cell type and each element having a length of at least 50 mm, a cross-sectional area in the range 10 to 50 square mm and a cross-sectional shape having a maximum aspect ratio of 4:1. The elongate elements may be used in combination with granules which may be of a similar material to that of the elongate elements and have a volume of less than 10 cm³.

## Description

This invention relates to a method of providing bedding for the stabling of livestock, such as horses, and to a bedding and a bedding material therefor.

A traditional bedding material for livestock has been straw. However straw is becoming increasingly costly and there is the attendant time and expense of maintaining stocks of new straw and disposing of used material.

As a replacement for traditional straw bedding, rubber mats and the like mattress type structures have been proposed and used. However, such mats are relatively expensive and are prone to permanent damage by virtue of the high localised loading that can be placed thereon by e g animal hooves. Such mats are also not well disposed to facilitate drainage, and are difficult to clean.

The present invention seeks to provide an improved method for the bedding of livestock, and a bedding and bedding material for use in accordance with the method.

In accordance with one aspect of the present invention a method of providing bedding for the stabling of livestock comprises distributing on a floor surface a layer of elongate elements of substantially resilient foamed material of a closed cell type, each elongate element having a length of at least 50 mm, a cross-sectional area in the range 10 to 50 square mm and a cross-sectional shape having a maximum aspect ratio as hereinafter defined of 4:1.

By maximum aspect ratio is meant herein the maximum ratio between the dimensions of the element as considered in any of two mutually perpendicular directions in a cross-sectional plane perpendicular to the length of the element.

The present invention further provides a bedding material for livestock comprising a plurality of elongate elements of substantially resilient foam material of the closed cell type, each elongate element having a length of at least 50 mm, a cross-sectional area in the range 10 to 50 square mm and a cross-sectional shape having a maximum aspect ratio of 4:1 as herein defined.

Preferably the elongate elements have an aspect ratio of less than 2:1. It is preferred also that the elongate elements each have a smooth, curved external surface though this is not essential. Circular and elliptical type cross-sectional shapes are considered suitable.

Preferably each elongate element is of circular cross-sectional shape and has a diameter in the range 4 to 7 mm, a diameter of 5 mm being particularly preferred.

Each elongate element may have a smooth skinned surface over a substantial part of its external surface. The elongate elements may be formed by an extrusion technique and subsequent cutting of long length extruded material to required length. The cut ends may be textured by virtue of exposure of the closed cell structure within the material and the external surface of each element between its cut ends may be substantially smooth.

Each elongate element preferably is provided in a strip form. However the invention does not exclude the provision of elongate elements of an endless type such as may be performed by taking a strip elongate material and joining its ends or by forming at the outset a ring of material.

Preferably each elongate element has a length of at least 75 mm and less than 800 mm, more preferably less than 500 mm. Particularly preferred lengths are in the range 150 to 300 mm.

Said elongate elements may be used alone to provide a bedding. Alternatively they may be used in combination with other material such as granules of substantially resilient foamed material of a closed cell type. The granules may each be of a kind having a volume of less than 10 cm³ and more preferably less than 5 cm³, and each granule may have a substantially water impermeable smooth skin.

Suitable materials for the elongate elements include EPDM and natural rubber. Preferably the foamed material has a density in the range 0.4 to 0.7 grams/cm³.

Where granules are provided they may be of the same material as that used to form the elongate elements.

The invention also provides bedding comprising a layer of said bedding material which is provided to a depth of at least 30 mm, more preferably at least 60 mm when initially uniformly laid. Preferably the depth of material does not exceed 150 mm and more preferably is less than 100 mm.

The granules preferably are of an irregular shape such that air and drainage spaces tend naturally to arise between adjacent granules and elongate elements.

The material of the elongate elements preferably has a compression set in the range 0 to 50%, a resiliency in the range 0 to 50%, and an absorbtion rate in the range 0 to 25% by weight.

The invention also provides, for use as a bedding for livestock, granules of resilient polymeric foam material, said material being of a closed cell type foam and all external surfaces of each granule being substantially water impermeable, each granule having a volume less than 10 cm³ and more preferably less than 5 cm³.

The bedding may be rendered re-useable by periodic cleaning, for example by air pressure water jet or rotary screen washing.

The construction of each element and granule may be undertaken by techniques well known to those skilled in the polymer art. Each element or granule may for example comprise a natural or synthetic rubber based polymer compound, with care being taken during the formulation of appropriate ingredients to exclude any which might prove toxic to the livestock.

The invention envisages that the elements and granules may be formed by producing extruded foam material on a continuous long length basis and then cutting to a required size. Cutting may be undertaken prior to curing to provide a protective substantially water impermeable skin over the entire surface of each element or granule.

The present invention envisages that in use the elongate elements and granules will be loose laid, i e each will be free to move relative to and be structurally non-interconnected with other elements or granules. Alternatively, however, a plurality of elements and/or granules may be interconnected, e g by means of adhesive at their cross-over points. There thereby results a unitary open mesh structure which may be laid in situ in a single operation without the need for on-site spreading and levelling.

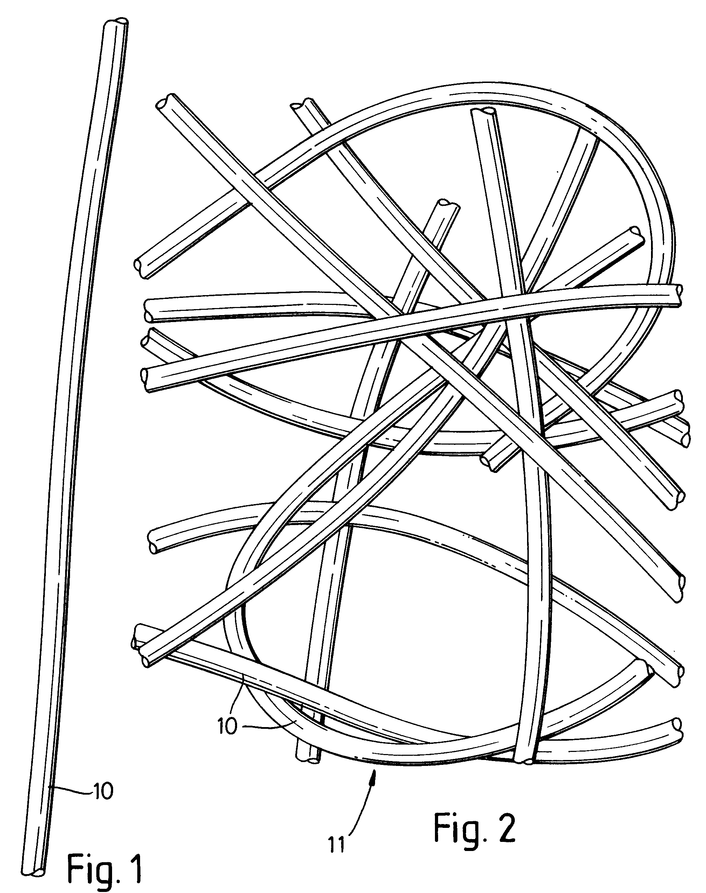

One embodiment of the present invention is illustrated in the accompanying two drawings in which Figure 1 shows an elongate element 10 for use in bedding according to the present invention and Figure 2 shows a small area of bedding 11 in accordance with the present invention and having a thickness of approximately 30 mm.

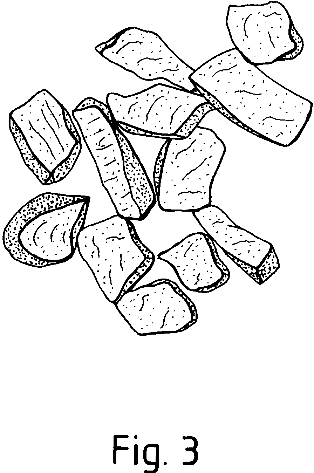

Figure 3 shows a collection of granules of random shape and which may be interspersed with the elongate elements of the present invention.

## Claims

1. Bedding material for livestock characterised in that it comprises a plurality of elongate elements (10) of substantially resilient foam material of the closed cell type, each elongate element having a length of at least 50 mm, a cross-sectional area in the range 10 to 50 square mm and a cross-sectional shape having a maximum aspect ratio of 4:1 as herein defined.

2. Bedding material according to claim 1 characterised in that said elongate elements (10) have an aspect ratio of less than 2:1.

3. Bedding material according to claim 1 or claim 2 characterised in that each elongate element (10) has a smooth skin surface over a substantial part of its external surface.

4. Bedding material according to any one of the preceding claims characterised in that at least some elongate elements (10) are in strip form and have a length in the range 75 to 800 mm, preferably in the range 150 to 300 mm.

5. Bedding material according to any one of the preceding claims characterised in that said elongate elements (10) are formed from elastomeric polymeric material having a density in the range 0.4 to 0.7 grams/cm³.

6. Bedding for livestock characterised in that it comprises a plurality of elongate elements (10) according to any one of the preceding claims provided to a depth of at least 30 mm and preferably to a depth of less than 150 mm.

7. Bedding according to claim 6 characterised in that the depth of material is in the range 60 to 100 mm.

8. Bedding according to claim 6 or claim 7 characterised in that it comprises in combination with said elongate elements (10) granules of substantially resilient foam material of the closed cell type.

9. Bedding according to claim 8 characterised in that said granules are each of a kind having a volume of less than 10 cm³, preferably less than 5 cm³.

10. Method of providing bedding for livestock characterised in that it comprises distributing on a floor surface a layer of elongate elements (10) of substantially resilient foam material of a closed cell type, each elongate element having a length of at least 50 mm, a cross-sectional area in the range 10 to 50 square mm, and a cross-sectional shape having a maximum aspect ratio as hereinbefore defined of 4:1.
